**Europäisches Patentamt**

**European Patent Office**

**Office européen des brevets**

(19)

(11) Veröffentlichungsnummer: **0 071 091**
**B1**

(12) ## EUROPÄISCHE PATENTSCHRIFT

(45) Veröffentlichungstag der Patentschrift:
**10.10.84**

(51) Int. Cl.³: **G 01 N 31/08**

(21) Anmeldenummer: **82106318.7**

(22) Anmeldetag: **14.07.82**

(54) **Probengeber für Gaschromatographen.**

(30) Priorität: **29.07.81 DE 3129833**

(43) Veröffentlichungstag der Anmeldung:
**09.02.83 Patentblatt 83/6**

(45) Bekanntmachung des Hinweises auf die Patenterteilung:
**10.10.84 Patentblatt 84/41**

(84) Benannte Vertragsstaaten:
**DE FR GB IT**

(56) Entgegenhaltungen:
**DE - A - 2 815 023**
**DE - A - 2 818 251**
**DE - B - 1 284 660**

(73) Patentinhaber: **Bodenseewerk Perkin-Elmer & Co. GmbH, Alte Nussdorfer Strasse 15 Postfach 1120, D-7770 Überlingen/Bodensee (DE)**

(72) Erfinder: **Pospisil, Peter, Dipl.-Ing., Magnolienweg 9, D-7770 Überlingen (DE)**

(74) Vertreter: **Weisse, Jürgen, Dipl.-Phys. et al, Patentanwälte Dipl.-Phys. Jürgen Weisse Dipl.-Chem. Dr. Rudolf Wolgast Bökenbusch 41 Postfach 11 03 86, D-5620 Velbert 11 Langenberg (DE)**

**Beschreibung**

Die Erfindung betrifft einen Probengeber für Gaschromatographen, enthaltend

(a) eine über einen Verbindungskanal mit dem Eingang einer gaschromatographischen Trennsäule verbundene Stechkanüle,

(b) eine zwischen Stechkanüle und Trennsäule in den Verbindungskanal mündende Trägergasleitung,

(c) ein in der Trägergasleitung angeordnetes, steuerbares Ansperrventil, und

(d) Mittel zum Einstechen der Stechkanüle durch selbstdichtende Membranen von Probengefäßen hindurch in die in den Probengefäßen über der Probe gebildeten Dampfräume.

In einem geschlossenen Probengefäß stellt sich im Dampfraum oberhalb einer flüssigen Probe ein Gleichgewichtszustand ein, bei welchem die Partialdrücke der einzelnen Probenbestandteile proportional den Konzentrationen der Probenbestandteile in der flüssigen Probe sind. Bei einem nach der Dampfraummethode arbeitenden Probengeber wird ein abgemessenes Volumen aus dem Dampfraum des Probengefäßes auf den Einlaßteil eines Gaschromatographen gegeben. Aus der Zusammensetzung dieser Dampfraumprobe kann auf die Zusammensetzung der flüssigen Probe im Probengefäß geschlossen werden.

Bei einem bekannten Probengeber (DE-PS 1 284 660) sind Probengefäße mit einer selbstdichtenden Membran abgeschlossen. Durch diese selbstdichtende Membran wird eine Stechkanüle hindurchgestochen, die mit dem Eingang der Trennsäule eines Gaschromatographen in Verbindung steht. Der Eingang der Trennsäule ist wiederum mit einer Trägergasleitung verbunden, die durch ein Magnetventil absperrbar ist. Bei geöffnetem Magentventil wird der am Eingang der Trennsäule herrschende Trägergasdruck über die als Kapillare wirkende Stechkanüle auf den Dampfraum des Probengefäßes übertragen, so daß sich in diesem ein erhöhter Druck aufbaut. An den Partialdrücken der Probenbestandteile ändert sich dabei nichts. Nach Absperren der Trägergasleitung durch das Magnetventil bricht der Druck am Eingang der Trennsäule zusammen. Es fließt jetzt Trägergas plus Probendampf aus dem Dampfraum zum Einlaßteil des Gaschromatographen am Eingang der Trennsäule. Das so dosierte Volumen wird bestimmt durch die Zeitspanne, während welcher das Magnetventil in der Trägergasleitung abgesperrt ist.

Um reproduzierbare Ergebnisse und ausreichende Dampfdrücke zu erhalten, werden die Probengefäße üblicherweise auf erhöhter Temperatur thermostatisiert (DE-OS 28 18 251).

Für die optimale Trennung der Probe in der Trennsäule ergibt sich ein bestimmter Druck, der während der Analyse auf den Eingang der Trennsäule gegeben werden sollte. Wenn sehr flüchtige Proben aufgegeben werden sollen, dann kann es geschehen, daß diese beim Vorheizen in den geschlossenen Probengefäßen einen Druck aufbauen, welcher den erwähnten optimalen Druck überschreitet. Diese Erscheinung ergibt sich insbesondere bei Kapillarsäulen, die nur einen geringen Strömungswiderstand besitzen und bei denen zur Erzeugung der optimalen Strömung nur ein geringer Vordruck benötigt wird.

Bei Wahl eines solchen Drucks nach Einstechen der Stechkanüle in den Dampfraum fließt kein Trägergas zum Druckaufbau in das Probengefäß, sondern es strömt von vornherein Dampf aus dem Dampfraum gegen den niedrigeren Trägergasdruck zur Trennsäule. Auch nach dem Dosieren, wenn das vorübergehend geschlossene Magnetventil in der Trägergasleitung wieder geöffnet wird, wird dadurch die Strömung aus dem Dampfraum zur Säule nicht unterbrochen. Es ist daher keine definierte Probengabe möglich.

Der Erfindung liegt die Aufgabe zugrunde, auch bei Proben, die einen hohen Druck aufbauen, einerseits eine genau definierte Probengabe und andererseits ein Arbeiten mit optimalem Trägergasdruck zu ermöglichen.

Erfindungsgemäß wird diese Aufgabe gelöst durch

(e) Mittel zum Erzeugen eines ersten, höheren Trägergasdrucks an einem ersten Trägergasanschluß,

(f) Mittel zum Erzeugen eines zweiten, gegenüber dem ersten verminderten Trägergasdrucks an einem zweiten Trägergasanschluß und

(g) ein Umschaltventil, durch das wahlweise der erste oder der zweite Trägergasanschluß mit der Trägergasleitung verbindbar ist.

Es kann dann mit höherem Druck ein Druckaufbau im Probengefäß bewirkt oder jedenfalls ein vorzeitiges Überströmen von Probendämpfen verhindert werden. Anschließend wird das Absperrventil geschlossen und es erfolgt in üblicher Weise die Probengabe, d. h. die Überführung eines definierten Volumens von Probendampf zum Eingang der Trennsäule. Die Probengabe wird durch Wiederaufschalten des ersten, höheren Trägergasdrucks unterbrochen. Nach dem Herausziehen der Stechkanüle aus dem Probengefäß, wenn der Ausgang der Stechkanüle vorzugsweise über eine Drossel mit der Atmosphäre in Verbindung steht, wird auf den zweiten, verminderten Trägergasdruck umgeschaltet, und dieser Trägergasdruck kann so gewählt sein, daß er die optimale Strömung ergibt.

Ein Ausführungsbeispiel der Erfindung ist nachstehend unter Bezugnahme auf die Zeichnungen näher erläutert.

Fig. 1 zeigt einen Schnitt durch eine Stechkanülenanordnung.

Fig. 2 zeigt eine Einzelheit »X« von Fig. 1 in vergrößertem Maßstab.

Fig. 3 zeigt eine pneumatische Schaltung der Stechkanüle, der Trennsäule und der Absperr- und Umschaltventile.

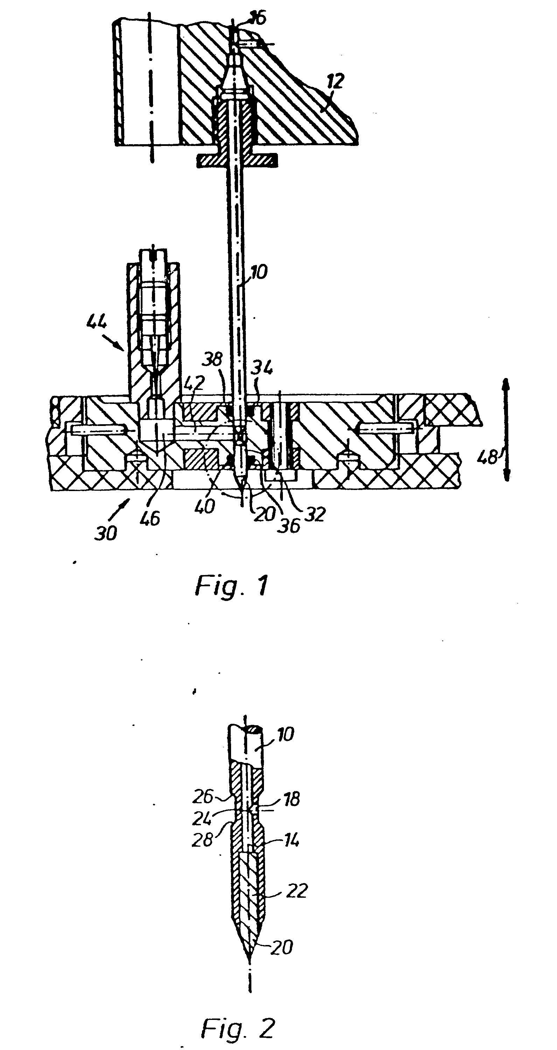

In Fig. 1 ist mit 10 eine Stechkanüle bezeichnet, die fest in dem Einspritzblock 12 eines Gaschromatographen gehalten ist. Die Stechkanüle 10 hat einen Längskanal 14, der mit einem Verbindungskanal 16 im Einspritzblock 12 in Verbindung steht. Der Längskanal 14 steht mit einer Querbohrung der Stechkanüle in Verbindung. Diese Querbohrung bildet eine seitliche Austrittsöffnung 18. Am Ende der Stechkanüle sitzt eine Spitze 20. Diese Spitze 20 ist an einem Endstück 22 vorgesehen, das in eine Erweiterung der Längsbohrung 14 eingepreßt ist und die Längsbohrung 14 stirnseitig abschließt. Trägergas strömt also aus dem Verbindungskanal 16 durch die Längsbohrung 14 und seitlich aus der Austrittsöffnung 18 heraus.

Die Stechkanüle 10 hat im Vergleich zu den bei vorbekannten Geräten benutzten Stechkanülen eine etwas größere Wandstärke. Während bei bekannten Geräten Stechkanülen mit einem Außendurchmesser von 1 mm benutzt werden, hat die Stechkanüle 10 vorzugsweise einen Außendurchmesser von 1,5 mm. Dafür weist die Stechkanüle 10 im Bereich der Austrittsöffnung 18 eine Umfangsnut 24 auf. Die seitliche Austrittsöffnung 18 mündet auf dem Grund der Umfangsnut 24. Die Seitenwände 26 und 28 der Umfangsnut sind abgeschrägt, so daß sich die Umfangsnut 24 nach außen hin erweitert. Die Kanten der Umfangsnut sind verrundet und poliert.

Ein Gehäuse 30 weist eine Gehäusebohrung 32 auf. Die Gehäusebohrung 32 ist von zwei im Abstand voneinander angeordneten Ringnuten 34, 36 umgeben, in denen Dichtringe 38 bzw. 40 in Form von O-Ringen gehalten sind. Zwischen den Dichtringen 38 und 40 zweigt von der Gehäusebohrung 32 ein seitlicher Auslaßkanal 42 ab. Der Auslaßkanal 42 ist über eine Drossel 44 mit der Atmosphäre verbunden. Zu diesem Zweck mündet der Auslaßkanal 42 in einer zu der Gehäusebohrung 32 parallelen Sacklochbohrung 46. In diese Sacklochbohrung 46 ist die als Nadelventil ausgebildet, einstellbare Drossel 44 eingesetzt.

Die Stechkanüle 10 erstreckt sich durch die Gehäusebohrung 32. Die Dichtringe 38 legen sich dichtend an die Außenfläche der Stechkanüle 10 an und bewirken eine Abdichtung zwischen Stechkanüle 10 und Gehäusebohrung 32. Das Gehäuse 30 ist parallel zu der Stechkanüle verschiebbar geführt, wie durch den Doppelpfeil 48 angedeutet ist. In der in Fig. 1 dargestellten Ruhestellung befindet sich die Auslaßöffnung 18 zwischen den Dichtringen 38 und 40. Über die Umfangsnut 24 steht sie mit dem Auslaßkanal 42 in Verbindung.

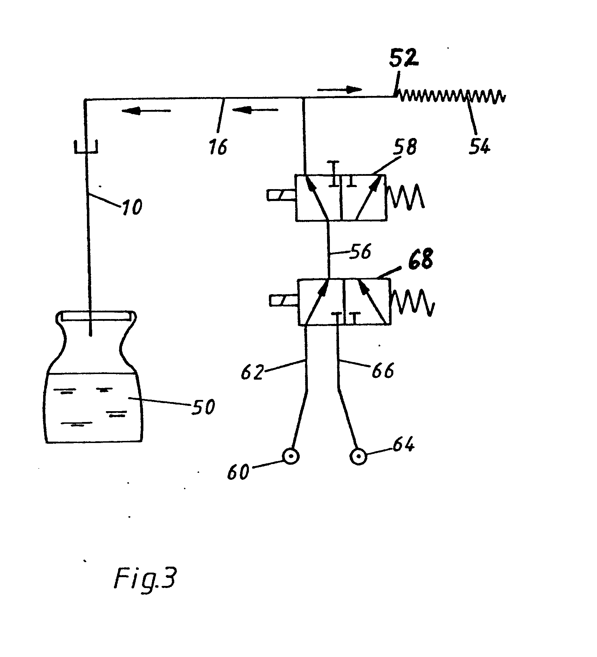

Wird ein durch eine selbstdichtende Membran abgeschlossenes Probengefäß 50 (Fig. 3) von unten (in Fig. 1) gegen das Gehäuse 30 gedrückt, so wird das Gehäuse 30 nach oben gegenüber der feststehenden Stechkanüle 10 verschoben. Die Stechkanüle 10 sticht mit ihrer Spitze 20 durch die Membran des Probengefäßes. Der Dichtring 36 bewegt sich an der Austrittsöffnung 18 der Stechkanüle 10 vorbei. Die Austrittsöffnung tritt durch die Membran hindurch in das Probengefäß ein. Jetzt ist der Verbindungskanal 16 über den Längskanal 14 und die Austrittsöffnung 18 weitgehend ungedrosselt mit dem Dampfraum des Probengefäßes verbunden.

Die konstruktive Ausbildung der Stechkanülenanordnung ist Gegenstand der älteren, nicht vorveröffentlichten deutschen Patentanmeldung P 3 109 616.6.

Der Verbindungskanal 16 verbindet die Stechkanüle 10 mit dem Eingang 52 einer gaschromatischen Trennsäule 54. In den Verbindungskanal 16 mündet zwischen Stechkanüle 10 und Trennsäule 54 eine Trägergasleitung 56. In der Trägergasleitung 56 ist ein steuerbares, hier als Magnetventil ausgebildetes Absperrventil 58 angeordnet. Es sind Mittel 60 zum Erzeugen eines ersten, höheren Trägergasdrucks an einem ersten Trägergasanschluß 62 und Mittel 64 zum Erzeugen eines zweiten, gegenüber dem ersten verminderten Trägergasdrucks an einem zweiten Trägergasanschluß 66 vorgesehen. Durch ein Umschaltventil 68, das ebenfalls als Magnetventil ausgebildet ist, ist wahlweise der erste und der zweite Trägergasanschluß 62 oder 66 mit der Trägergasleitung verbindbar.

In der in Fig. 3 dargestellten Schaltstellung ist erhöhter Druck vom Trägergasanschluß 62 am Eingang 52 der Trennsäule 54 wirksam. Dieser erhöhte Druck wird über die Verbindungsleitung 16 und die Stechkanüle 10 auf den Dampfraum des Probengefäßes 50 übertragen. Der von den Mitteln 60 am Trägergasanschluß 62 erzeugte Druck ist so hoch, daß auch bei flüchtigen Proben keine Strömung aus dem Probengefäß 50 gegen den Trägergasdruck in den Verbindungskanal 16 stattfinden kann. Durch Absperren des Ventils 58 erfolgt eine Probenaufgabe: Der Druck am Eingang 52 der Trennsäule bricht zusammen, so daß Probendampf aus dem Dampfraum des Probengefäßes 50 über die Stechkanüle 10 und den Verbindungskanal 16 zur Trennsäule 54 fließt. Es wird zur Beendigung der Probengabe das Ventil 58 wieder geöffnet. Die Stechkanüle 10 wird aus dem Probengefäß 50 herausgezogen und gelangt in die in Fig. 1 dargestellte Lage. Gleichzeitig wird das Umschaltventil 68 umgeschaltet und legt von den Mitteln 64 her über den Trägergasanschluß 66 den verminderten, für den Betrieb der Trennsäule 54 optimalen zweiten Trägergasdruck an den Eingang der Trennsäule 54. Mit diesem Druck wird die aufgegebene Probe durch die Trennsäule 54 transportiert. Über die Stechkanüle 10 sowie Auslaßkanal 42 und Drossel 44 fließt ein Spülstrom, der das System von Resten der gerade aufgegebenen Probe reinigt.

## Patentanspruch

Probengeber für Gaschromatographen, enthaltend:

(a) eine über einen Verbindungskanal (16) mit dem Eingang (52) einer gaschromatographischen Trennsäule (54) verbundene Stechkanüle (10),

(b) eine zwischen Stechkanüle (10) und Trennsäule (54) in den Verbindungskanal (16) mündende Trägergasleitung (56),

(c) ein in der Trägergasleitung (56) angeordnetes, steuerbares Absperrventil (58) und

(d) Mittel zum Einstechen der Stechkanüle (10) durch selbstdichtende Membranen von Probengefäßen hindurch in die in den Probengefäßen (50) über der Probe gebildeten Dampfräume,

gekennzeichnet durch

(e) Mittel (60) zum Erzeugen eines ersten, höheren Trägergasdrucks an einem ersten Trägergasanschluß (62),

(f) Mittel (64) zum Erzeugen eines zweiten, gegenüber dem ersten verminderten Trägergasdrucks an einem zweiten Trägergasanschluß (66) und

(g) ein Umschaltventil (68) durch das wahlweise der erste oder der zweite Trägergasanschluß (62, 66) mit der Trägergasleitung (56) verbindbar ist.

## Claim

Sampling device for gas chromatographs, comprising:

(a) a needle (10) communicating with the inlet (52) of a gas chromatographic separating column (54) through a connecting passage (16),

(b) a carrier gas conduit (56) ending in the connecting passage (16) between the needle (10) and the separating column (54),

(c) a controllable shut-off valve (58) arranged in the carrier gas conduit (56), and

(d) means for sticking the needle (10) through selfsealing diaphragms of sample vessels into the head spaces formed in the sample vessels (50) above the sample,

caracterized by

(e) means (60) for providing a first higher carrier gas pressure at a first carrier gas port (62),

(f) means (64) for providing a second pressure at a second carrier gas port (66), which pressure is reduced with respect to the first pressure, and

(g) a change-over valve (68) adapted to connect alternatively the first or the second carrier gas port (62, 66) to the carrier gas conduit (56).

## Revendication

Dispositif d'alimentation d'échantillon pour des chromatographes pour phase gazeuse, contenant

(a) une canule (10) qui, par l'intermédiaire d'un canal de raccordement (16) communique avec l'entrée (52) d'une colonne à fractionner (54) de chromatographe pour phase gazeuse,

(b) une conduite de gaz porteur (56) qui débouche dans le canal de raccordement (16) entre la canule (10) et la colonne à fractionner (54),

(c) une soupape d'arrêt (58) qui peut être commandée et qui est disposée dans la conduite de gaz porteur (56), et

(d) des moyens pour enfoncer la canule (10) à travers des membranes auto-étanchéifiantes des récipients d'échantillon dans les espaces à vapeur formés dans les récipients d'échantillon (50) au-dessus de l'échantillon,

caractérisé par

(e) des moyens (60) pour produire une première pression élévée du gaz porteur à un premier raccord de gaz porteur (62),

(f) des moyens (64) pour produire une deuxième pression réduite par rapport à la première, à un deuxième raccord de gaz porteur (66), et

(g) une soupape d'inversion (68), par laquelle le premier ou le deuxième raccord de gaz porteur (62, 66) peut être liè facultativement à la conduite de gaz porteur (56).

Fig. 1

Fig. 2

Fig.3